# EUROPÄISCHE PATENTSCHRIFT

(11) **EP 0 901 590 B1**
(45) Veröffentlichungstag und Bekanntmachung des Hinweises auf die Patenterteilung: **10.05.2000**
(21) Anmeldenummer: 97915392.1
(22) Anmeldetag: 19.03.1997
(51) Int. Cl.: F16K 11/078, F16K 27/04, F16J 15/16

(54) **KARTUSCHE FÜR SANITÄRE ARMATUREN**
CARTRIDGE FOR SANITARY FITTINGS
CARTOUCHE POUR ROBINETTERIE SANITAIRE

(30) Priorität: 24.05.1996 AT 92396
(43) Veröffentlichungstag der Anmeldung: 17.03.1999
(73) Patentinhaber: Ideal-Standard GmbH & Co. OHG, 53121 Bonn (DE)
(72) Erfinder: NIKOLAYCZIK, Hans, D-54518 Minheim (DE)
(74) Vertreter: Puchberger, Rolf, Dipl. Ing.
(86) Internationale Anmeldenummer: EP9701377
(87) Internationale Veröffentlichungsnummer: WO9745662

(56) Entgegenhaltungen:
- EP-A- 0 471 643
- EP-A- 0 551 059
- EP-A- 0 665 394
- GB-A- 2 186 641
- US-A- 3 362 720
- PATENT ABSTRACTS OF JAPAN vol. 096, no. 005, 31.Mai 1996 & JP 08 021543 A (INAX CORP), 23.Januar 1996,

## Beschreibung

Die Erfindung betrifft eine Kartusche für sanitäre Armaturen mit mindestens einer festen und einer beweglichen Ventilscheibe, die von einem Gehäuse umschlossen sind, wobei die an den Boden des Gehäuses anschließende feste Ventilscheibe mindestens einen Durchbruch mit einer Erweiterung für den Wassereintritt an der dem Boden zugewandten Seite der festen Ventilscheibe aufweist, welche Erweiterung koaxial mit einer Durchgangsöffnung im Boden des Gehäuses ist und einen Dichtungsring aufnimmt, der auch die Durchgangsöffnung durchsetzt.

Bei Kartuschen dieser Art sind die Ventilscheiben in das Gehäuse derart eingeschweißt, daß sich ein Montagespalt parallel zur Kontatkfläche der Scheiben ergibt. D.h. die Höhe des Innenraums des Gehäuses ist um die Breite dieses Montagespalts größer als die Summe der Dicken der Ventilscheiben. In der Praxis ist dieser Montagespalt bis zu 0,1mm breit.

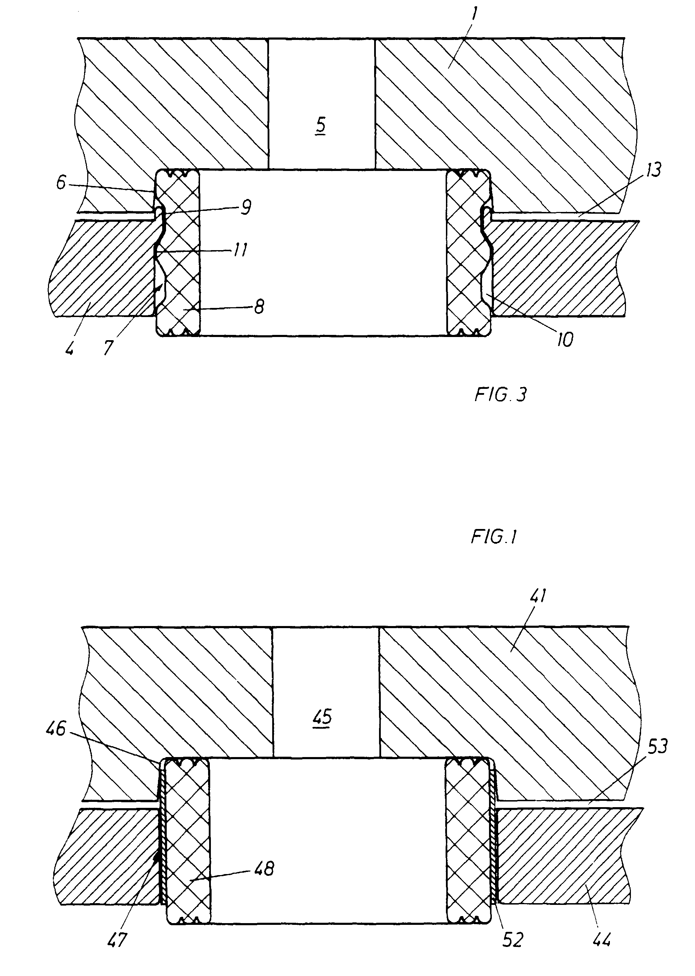

In Fig.1 ist ein Detail aus einer Kartusche, wie sie aus dem Stand der Technik bekannt ist, gezeigt. Mit Bezugszeichen 44 ist der Boden des Kartuschengehäuses bezeichnet, der von der Durchgangsöffnung 47 durchbrochen ist. Koaxial mit der Durchgangsöffnung 47 im Kartuschenboden 44 ist der Durchbruch 45 und eine Erweiterung 46 in der festen Ventilscheibe 41. Die Durchgangsöffnung 47 wird von einem Dichtungsring 48 durchsetzt, der in die Erweiterung 46 ragt. Wird die Kartusche im Gehäuse der sanitären Armatur montiert, so geschieht dies unter Druck auf den Dichtungsring 48, der die feste Ventilscheibe 41 an die nicht dargestellte bewegliche Ventilscheibe preßt, sodaß der Montagespalt 53 zwischen den einander zugewandten Seiten der festen Ventilscheibe 41 und des Gehäusebodens 44 liegt.

Der Dichtungsring wird bei geschlossenem Ventil vom jeweiligen Druck des örtlichen Wasserleitungssystem belastet und unterliegt bei geschlossenem Ventil dem vollen statischen Druck des Wassers. Dabei kommt es zu Verformungen des elastischen Dichtungsringes und es passiert in der Praxis, daß der Dichtungsring wassereintrittsseitig in den Montagespalt gedrückt wird und die Funktionsfähigkeit der sanitären Armatur erheblich beeinträchtigt wird. Um diesem Einziehen des Dichtungsringes in dem Montagespalt entgegen zu wirken, ist es aus dem Stand der Technik bekannt, auf den Dichtungsring aussen einen Stahlring (im Beispiel aus Fig.1 mit 52 bezeichnet) aufzuschieben, der den Dichtungsring stützt und den Montagespalt überbrückt. Auf Grund der üblichen geringen Abmessungen handelt es sich bei diesem Stahlring um einen sehr dünnen Bauteil, der leicht verbogen werden kann. Diese Stützringe sind teuer in der Herstellung, müssen händisch auf den Dichtungsring 48 aufgesetzt werden und erhöhen damit die Montagezeit und damit die Kosten der sanitären Armatur.

Es ist daher Aufgabe der vorliegenden Erfindung, eine Möglichkeit zu finden, auf kostengünstige Weise das Einziehen des Dichtungsringes zu verhindern.

Die Erfindung wird dadurch gelöst, daß an der der festen Ventilscheibe zugewandten Oberfläche des Bodens ein die Durchgangsöffnung umgebender Rand angeformt ist, der in die Erweiterung der festen Ventilscheibe ragt. Dieser angeformte Rand bringt praktisch keine Kostenerhöhung bei der Herstellung des Gehäuses, überbrückt aber zuverlässig den Montagespalt, sodaß der Dichtungsring nicht in dem Montagespalt unter dem hohen statischen Wasserdruck bei geschlossenem Ventil eingezogen werden kann.

Vorzugsweise ist der Durchmesser der Durchgangsöffnung des Bodens im Bereich des Randes kleiner als der Durchmesser im übrigen Bereich der Durchgangsöffnung. Somit kann wie gewohnt, die Durchgangsöffnung im Gehäuseboden den gleichen Durchmesser haben, wie der Durchbruch in der festen Ventilscheibe und der Dichtungsring kann im wesentlichen zylindrisch ausgeformt sein und den gleichen Durchflußquerschnitt wie im Stand der Technik aufweisen.

Gemäß einer bevorzugten Ausführungsform der Erfindung weist der Dichtungsring an seiner Aussenfläche eine ringförmige Ausnehmung auf, in der der an den Boden des Gehäuses angeformte Rand liegt. D.h. der Dichtungsring hat bis auf den Bereich der ringförmigen Ausnehmung für den Rand die aus dem Stand der Technik gewohnte Stärke und wird andererseits durch den Rand nicht elastisch verformt.

Vorzugsweise weist der Dichtungsring in der ringförmigen Ausnehmung einen zentralen ringförmigen Steg auf, der die Stabilität des Dichtungsringes verbessert.

Dabei ist es vorteilhaft, wenn der Dichtungsring in Bezug auf die zu seiner Längsachse normale Mittelebene symmetrisch ausgebildet ist. Sodaß der Dichtungsring in beliebiger Richtung in die Durchgangsöffnung des Gehäusebodens und die Erweiterung in der Ventilscheibe eingesetzt werden kann und es zu keinen Montagefehlern kommen kann.

Zur Verdeutlichung der Erfindung soll diese an Hand der beiliegenden Zeichnungen nunmehr nochmals erklärt werden.

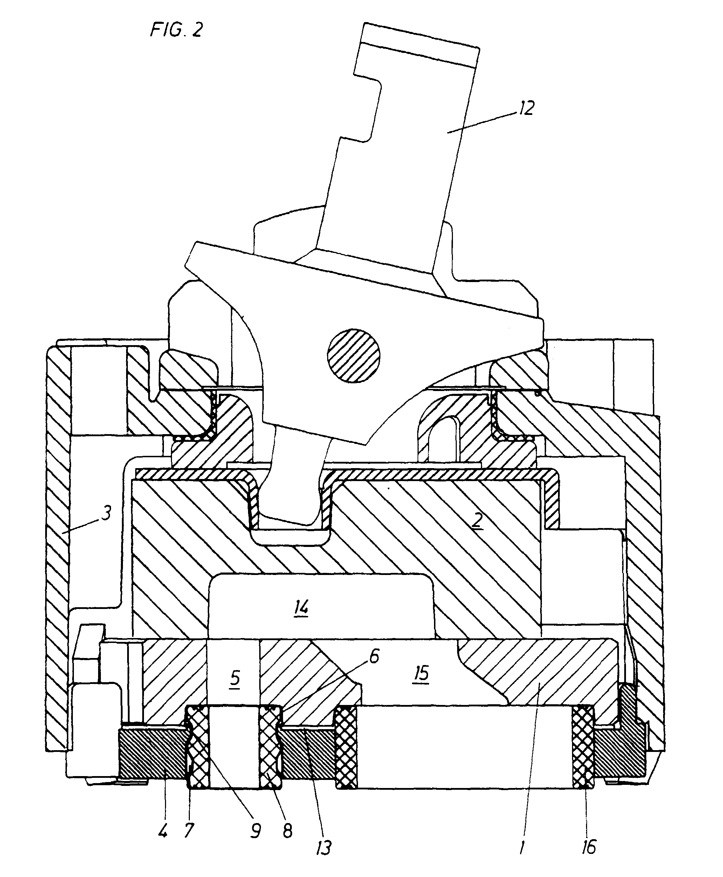

Dabei zeigt Fig.1 wie schon erwähnt, ein Detail aus einer Kartusche gemäß dem Stand der Technik; die Fig.2 zeigt eine Kartusche mit einem Bedienungshebel im Längsschnitt und Fig.3 zeigt ein Detail aus einer Kartusche entsprechend dem Detail aus Fig.1, jedoch mit den erfindungsgemäßen Merkmalen.

Die Fig.2 zeigt eine Kartusche mit einem Gehäuse 3, das mit einem Gehäuseboden 4 verbunden ist. In dem Gehäuse 3 befinden sich eine feste Ventilscheibe 1 und eine über den Hebel 12 bedienbare bewegliche Ventilscheibe 2. Das Ventil ist geöffnet dargestellt, d.h. das Wasser fließt durch den Dichtungsring 8, den Durchbruch 5, die Umlenkkammer 14, die gegebenenfalls auch als Mischkammer dient, durch die Ausgangsöffnung 15 und eine entsprechende Dichtung 16 zum nicht dargestellten Ausfluß. Der Dichtungsring 8 sitzt in der Durchgangsöffnung 7 des Bodens 4 und in der Erweiterung 6 des Durchbruches 5 der festen Ventilscheibe 1. Durch Druck auf die Dichtung 8 der beim Einsetzen der Kartusche in das Gehäuse der sanitären Armatur gegeben ist, wird die feste Ventilscheibe 1 gegen die bewegliche Ventilscheibe 2 gepreßt und der im Gehäuse vorhandene Montagespalt 13 bildet sich zwischen den einander zugewandten Oberflächen der festen Ventilscheibe 1 und des Gehäusebodens 4 aus, wie man in Fig.3 besser erkennt.

An die Durchgangsöffnung 7 des Gehäusebodens 4 ist der Rand 9 angeformt. Der Rand 9 erstreckt sich sowohl in radialer als auch in axialer Richtung der Durchgangsöffnung 7 und überbrückt vor allem den Montagespalt 13, sodaß der Dichtungsring 8 bei noch so großen Verformungskräften nicht in den Montagespalt 13 gedrückt werden kann. Der Dichtungsring 8 weist an seiner Aussenseite symmetrisch zu der zu seiner Längsachse normalen Mittelebene eine ringförmige Ausnehmung 10 auf, die von einem zentralen Steg 11 zweigeteilt wird. Der Rand 9 kommt in der oberen der beiden so ausgebildeten Ringnuten zu liegen. Wie man erkennt, ist die Dichtung in beide Richtungen einsetzbar, sodaß es zu keinen Montagefehlern kommen kann. Die Dichtung liegt mit ihrer Aussenseite sowohl in der Erweiterung 6 als auch durch ihren Steg 11 und ihren unteren Abschnitt in der Durchgangsöffnung 7 flächig an, ohne daß es zu einer Verformung des Dichtungsringes 8 durch den Rand 9 kommt. Bis auf den Bereich der ringförmigen Nuten 10 hat der Dichtungsring 8 die gleiche Stärke wie beim Stand der Technik, ist also praktisch gleich stabil, dennoch wird der Innendurchmesser des Dichtungsringes 8 gegenüber dem des Standes der Technik nicht verringert.

Weder die erfindungsgemäße Ausgestaltung, noch die Montage des Gehäusebodens 4 ist zeitaufwendig oder vom Material her teuer. Das gleiche gilt für den Dichtungsring 8 und die Zusammensetzung dieser Elemente. Es ist also gelungen, mit einfachen kostengünstigen Mitteln das Einziehen des Dichtungsringes zu verhindern und damit die Funktion der sanitären Armatur sicherer zu machen und sogar die Herstellungskosten der sanitären Armatur zu verringern.

## Patentansprüche

1. Kartusche für sanitäre Armaturen mit mindestens einer festen (1) und einer beweglichen (2) Ventilscheibe, die von einem Gehäuse (3) umschlossen sind, wobei die an den Boden (4) des Gehäuses (3) anschließende feste Ventilscheibe (1) mindestens einen Durchbruch (5) mit einer Erweiterung (6) für den Wassereintritt an der dem Boden zugewandten Seite der festen Ventilscheibe aufweist, welche Erweiterung (6) koaxial mit einer Durchgangsöffnung (7) im Boden des Gehäuses ist und einen Dichtungsring (8) aufnimmt, der auch die Durchgangsöffnung durchsetzt, dadurch gekennzeichnet, daß an der der festen Ventilscheibe (1) zugewandten Oberfläche des Bodens (4) ein die Durchgansöffnung (7) umgebender Rand (9) angeformt ist, der in die Erweiterung (6) der festen Ventilscheibe (1) ragt.

2. Kartusche nach Anspruch 1, dadurch gekennzeichnet, daß der Durchmesser der Durchgangsöffnung (7) des Bodens (4) im Bereich des Randes (9) kleiner ist als der Durchmesser im übrigen Bereich der Durchgangsöffnung (7).

3. Kartusche nach Anspruch 1 oder 2, dadurch gekennzeichnet, daß der Dichtungsring (8) an seiner Außenfläche eine ringförmige Ausnehmung (10) aufweist, in der der an den Boden (4) des Gehäuses (3) angeformte Rand (9) liegt.

4. Kartusche nach Anspruch 3, dadurch gekennzeichnet, daß der Dichtungsring (8) in der ringförmigen Ausnehmung (10) einen zentralen, ringförmigen Steg (11) aufweist.

5. Kartusche nach einem der vorhergehenden Ansprüche, dadurch gekennzeichnet, daß der Dichtungsring (8) in bezug auf die zu seiner Längsachse normale Mittelebene symmetrisch ausgebildet ist.

## Claims

1. Cartridge for sanitary fittings, having at least one fixed (1) and one movable (2) valve disc, which are enclosed by a housing (3), wherein the fixed valve disc (1) connected to the floor (4) of the housing (3) has at least one opening (5) with a widening (6) for water intake at the side of the fixed valve disc facing the floor, the widening (6) being coaxial with a feed-through opening (7) in the floor of the housing and accommodating a sealing ring (8) which also passes through the feed-through opening, characterized in that an edge (9) surrounding the feed-through opening (7) is integrally moulded to the surface of the floor (4) that faces the fixed valve disc (1), the edge projecting into the widening (6) of the fixed valve disc (1).

2. Cartridge according to claim 1, characterized in that the diameter of the feed-through opening (7) of the floor (4) in the region of the edge (9) is smaller than the diameter in the remaining region of the feed-through opening (7).

3. Cartridge according to claim 1 or 2, characterized in that the sealing ring (8) has on its outer surface an annular recess (10) in which the edge (9) which is integrally moulded to the floor (4) of the housing (3) lies.

4. Cartridge according to claim 3, characterized in that the sealing ring (8) has a central, annular bar (11) in the annular recess (10).

5. Cartridge according to one of the preceding claims, characterized in that the sealing ring (8) is constructed symmetrically with respect to the centre plane normal to the longitudinal axis of the sealing ring.

## Revendications

1. Cartouche pour robinets sanitaires comportant au moins un disque (1) de vanne fixe et un disque (2) de vanne mobile, qui sont enfermés dans un boîtier (3), le disque (1) de vanne fixe raccordé au fond (4) du boîtier (3) comportant au moins un passage (5) comportant un élargissement (6) pour l'entrée d'eau du côté tourné vers le fond du disque de vanne fixe, l'élargissement (6) étant coaxial avec une ouverture (7) de traversée dans le fond du boîtier et recevant une bague (8) d'étanchéité, qui passe aussi dans l'ouverture (7) de traversée, caractérisée en ce qu'il est issu de la surface supérieure du fond (4) tournée vers le disque (1) de vanne fixe, un bord (9) entourant l'ouverture (7) de traversée, ce bord pénétrant dans l'élargissement (6) du disque (1) de vanne fixe.

2. Cartouche suivant la revendication 1, caractérisée en ce que le diamètre de l'ouverture (7) de traversée du fond (4) est plus petit dans la région du bord (9) que le diamètre dans les autres régions de l'ouverture (7) de traversée.

3. Cartouche suivant la revendication 1 ou 2, caractérisée en ce que la bague (8) d'étanchéité comporte à sa surface extérieure un évidement (10) en forme d'anneau, dans lequel repose le bord (9) issu du fond (4) du boîtier (3).

4. Cartouche suivant la revendication 3, caractérisée en ce que la bague (8) d'étanchéité comporte dans l'évidement (10) en forme d'anneau une entretoise (11) centrale en forme d'anneau.

5. Cartouche suivant l'une des revendications précédentes, caractérisée en ce que la bague (8) d'étanchéité est formée symétrique par rapport au plan médian normal à son axe longitudinal.
